# EUROPÄISCHE PATENTSCHRIFT

(11) **EP 3 743 358 B1**
(45) Veröffentlichungstag und Bekanntmachung des Hinweises auf die Patenterteilung: **09.03.2022**
(21) Anmeldenummer: 19701504.3
(22) Anmeldetag: 22.01.2019
(51) Int. Cl.: B65D 85/804

(54) **PORTIONSPACKUNG UND VERFAHREN ZUR HERSTELLUNG EINES GETRÄNKS**
PORTION PACK AND METHOD FOR PRODUCING A BEVERAGE
EMBALLAGE POUR UNE PORTION ET PROCÉDÉ POUR LA PRODUCTION D'UNE BOISSON

(30) Priorität: 22.01.2018 DE 102018101333
(43) Veröffentlichungstag der Anmeldung: 02.12.2020
(73) Patentinhaber: Melitta Single Portions GmbH & Co. KG, 32425 Minden (DE)
(72) Erfinder: FERNANDES DE CARVALHO, Kerstin, 33604 Bielefeld (DE); PAHNKE, Jan, 32427 Minden (DE); SCHANDL, Gerold, 32425 Minden (DE); FELDMANN, Holger, 47877 Willich (DE)
(74) Vertreter: Dantz, Jan Henning
(86) Internationale Anmeldenummer: PCT/EP2019/051521
(87) Internationale Veröffentlichungsnummer: WO 2019/141871

(56) Entgegenhaltungen:
- EP-A1- 2 752 375
- EP-B1- 0 268 847
- EP-B1- 0 401 951
- DE-A1- 19 520 837

## Beschreibung

Die vorliegende Erfindung betrifft eine Portionspackung für die Herstellung eines Getränkes, insbesondere Kaffee, umfassend einen Behälter aus Filtermaterial, in dem ein Extraktionsmaterial angeordnet ist, und einen Stützkörper, der den Behälter zumindest bereichsweise umgibt, wobei der Behälter in einer Ausgangsposition geschlossen ausgebildet ist und durch Verschwenken zumindest eines Teils eines Randes des Filtermaterials zu öffnen ist, wobei der Behälter in der Ausgangsposition durch ein Verschlussmittel in der geschlossenen Position gehalten ist und ein Verfahren zur Herstellung eines Getränks mit einer Portionspackung.

Zur Zubereitung von Kaffee gibt es Filter, die gemäß der EP 268 847 B1 einen auf einem Gefäß aufsetzbaren Halterahmen aus Karton und einen Filterbeutel aus Filterpapier aufweisen. Dadurch kann der Filterbeutel über den Halterahmen in einer vorbestimmten Position gehalten werden, so dass der Benutzer zum Brühen von Kaffee den Filterbeutel befüllt und anschließend einen Brühvorgang durchführt. Zwar kann durch das individuelle Befüllen des Filterpapiers und das manuelle Brühen der Kaffeegeschmack individuell bei der Zubereitung berücksichtigt werden, das Mahlen und Befüllen des Filterbeutels mit Kaffeemehl und das anschließende manuelle Brühen ist jedoch vergleichsweise aufwändig.

In der DE 195 20 837 A1 ist ein Portionskaffeefilterbeutel mit gemahlenem Kaffee gezeigt, der vakuumverpackt ausgebildet sein kann und nach der Entnahme aus der Verpackung gebrauchsfertig ist. Solche Portionspackungen sind in vielfältiger Form bekannt und besitzen den Nachteil, dass die Bedürfnisse beim Zubereiten von Kaffee nur unzureichend berücksichtigt werden. Beim Brühen von Kaffee vergrößert sich das Volumen des Kaffeemehls, und, anders als bei der Herstellung von Espresso mit hohem Druck, soll sich das Kaffeemehl beim Aufgießen entfalten können. Zudem sind eine definierte Kaffeebettgeometrie und eine gleichmäßige Durchfeuchtung des Kaffeemehls beim Herstellen hochwertiger Kaffeegetränke erforderlich, was bei herkömmlichen Portionspackungen häufig nicht erreicht wird.

Die EP 401 951 B1 offenbart eine Filtervorrichtung mit einem Filterbeutel aus Papier und einem Stützkörper, der auf einer Tasse abstellbar ist. Eine ähnliche Filtervorrichtung zur Zubereitung eines Aufgussgetränkes zeigt EP 2 752 375. Es ist daher Aufgabe der vorliegenden Erfindung, eine Portionspackung für die Herstellung eines Getränks, insbesondere Kaffee, und ein Verfahren zur Herstellung eines Getränks zu schaffen, mittels denen eine einfache Zubereitung möglich ist bei hoher Qualität. Das Transportvolumen der Portionspackung soll klein sein, ohne das Volumen bei der Zubereitung einzuschränken.

Diese Aufgabe wird mit einer Portionspackung mit den Merkmalen des Anspruches 1 sowie einem Verfahren mit den Merkmalen des Anspruches 14 gelöst.

Bei der erfindungsgemäßen Portionspackung wird ein Behälter aus Filtermaterial, der zumindest bereichsweise von einem Stützkörper umgeben ist, in einer Ausgangsposition geschlossen gehalten, und dann wird für eine Getränkezubereitung ein Verschlussmittel gelöst, um die Portionspackung selbsttätig zu öffnen und somit einen unmittelbaren Zugang zu dem Extraktionsmaterial zu schaffen. Bei der anschließenden Getränkezubereitung kann sich das Volumen des Extraktionsmaterials ausdehnen, ohne dass es durch eine geschlossene Umhüllung komprimiert wird. Dadurch werden Qualitätseinbußen vermieden, insbesondere bei der Zubereitung von Kaffee durch Flotation und Filtration.

Dabei ist das Verschlussmittel an der Portionspackung durch Befeuchtung mit Wasser lösbar. Das Verschlussmittel kann beispielsweise aus wasserlöslichem Klebemittel bestehen, das für die Zubereitung von Lebensmitteln zugelassen ist und Stärke oder andere natürliche Klebstoffe enthalten kann. Durch die Befeuchtung des Verschlussmittels mit Wasser kann die Portionspackung geöffnet werden. Das Öffnen findet dabei erfindungsgemäß selbsttätig statt, beispielsweise durch eine Vorspannung der Portionspackung, die sich nach dem Lösen des Verschlussmittels dann öffnet. Vorzugsweise wird zum Öffnen allerdings Wasser eingesetzt, indem der Stützkörper an zumindest einer Faltkante mit Wasser befeuchtet wird und sich dadurch in der Form verändert. Eine andere Möglichkeit ist das Schwächen des Verschlussmittels selbst bis zum Versagen oder die Herabsetzung der Steifigkeit einer Steckverbindung. Auch durch mechanische Rast- oder Haltemittel kann ein Verschlussmittel gebildet sein, das dann durch Befeuchtung entriegelt werden kann.

In einer bevorzugten Ausgestaltung sind die verschwenkbaren Klappen des Stützkörpers in der geschlossenen Portion der Portionspackung in mindestens zwei Ebenen aufeinander angeordnet, um den Verschluss der Portionspackung besonders stabil auszubilden.

Der Stützkörper weist vorzugsweise an einer Oberseite des Behälters in der geschlossenen Position mehrere Klappen auf, die über Faltkanten mit einem Abschnitt an einer Seitenwand des Behälters verbunden sind. Durch Befeuchten der Faltkanten kann ein Quellprozess in Gang gesetzt werden, der zu einer Verformung und zu einem Aufschwenken der Klappen an der Oberseite des Behälters führt. Der Stützkörper ist vorzugsweise ringförmig an einem oberen Rand des Behälters in der geschlossenen Position vorgesehen, so dass durch Benetzung der Oberseite der Portionspackung mit Wasser optional das Verschlussmittel gelöst werden kann und insbesondere ein Verformungsprozess eingeleitet wird, der für ein Aufschwenken der Klappen sorgt. Der Stützkörper besteht vorzugsweise aus einem durch Wasser aufquellbaren Material, wie Karton oder einem dicken Papier, so dass ein Quellvorgang an einer Faltkante für entsprechende Schwenkbewegungen an den Klappen sorgt.

Für eine effektive Herstellung weist der Behälter mit dem Stützkörper in der geschlossenen Position in Draufsicht eine eckige Form auf, insbesondere ein fünf- bis achteckige Form, beispielsweise sechseckig. Dadurch kann zwischen den einzelnen Ecken des Behälters jeweils eine Faltkante vorgesehen sein, an denen jeweils eine Klappe verschwenkbar gelagert ist.

Der Behälter weist an der Unterseite vorzugsweise eine Spitze aus Filtermaterial auf, die nicht von dem Stützkörper überdeckt ist. Dadurch ist in einem unteren Bereich nur das Filtermaterial vorgesehen, das bei der Zubereitung des Getränks durchströmt werden kann, so dass der Stützkörper den Zubereitungsprozess für das Getränk nicht behindert. Die Spitze kann dabei kegelstumpfförmig oder pyramidenförmig ausgebildet sein, wobei der nicht durch den Stützkörper bedeckte Bereich mindestens 30 % der Höhe der Portionspackung in der Zubereitungsposition einnimmt. In der Gebrauchsposition mit nach unten weisender Spitze der Portionspackung bemisst sich die Höhe in vertikale Richtung.

Um die effektive Filterfläche zu vergrößern, können Abstandshalter, zum Beispiel Rippen, Profilierungen, Prägungen oder Ausschnitte, am Stützkörper angebracht sein. Dadurch kann der Stützkörper über die Abstandshalter exakt in einem Filtergefäß positioniert werden. Dabei kann das Filtermaterial im unteren Bereich beabstandet von einem Filtergefäß gehalten sein.

Das Filtermaterial ist vorzugsweise mit dem Stützkörper zusammen an der Oberseite entfaltbar, wobei Stützkörper und Filtermaterial hierzu miteinander verklebt oder mechanisch aneinander festgelegt sind. Das Filtermaterial ist in einer Ausgangsposition an einer Oberseite des Behälters gefaltet, also zumindest bereichsweise mehrlagig angeordnet, und kann über den Stützkörper und/oder die Verschlussmittel gehalten werden. Nach Lösen der Verschlussmittel kann dann das Filtermaterial mit den Klappen des Stützkörpers verschwenken, so dass der Bereich des Filtermaterials, der in einer Ausgangsposition eine obere Abdeckung für die Portionspackung bildet, nach dem Öffnen und Verschwenken eine Seitenwand ausbildet, so dass sich das in der Portionspackung befindliche Extraktionsmaterial bei der Zubereitung entsprechend ausdehnen kann.

Bei dem erfindungsgemäßen Verfahren wird zunächst die Portionspackung in eine Vorrichtung zur Getränkezubereitung eingelegt, und anschließend wird Wasser auf die Portionspackung aufgebracht und ein an der Portionspackung vorgesehenes Verschlussmittel durch Befeuchtung mit Wasser gelöst. Durch ein Lösen des Verschlussmittels kann die Portionspackung selbsttätig geöffnet und ein Stützkörper der Portionspackung entfaltet werden. Anschließend wird Wasser auf das in dem Behälter angeordnete Extraktionsmaterial zur Getränkezubereitung aufgebracht, so dass die Getränkezubereitung in einer geöffneten Position der Portionspackung erfolgt und sich das Extraktionsmaterial entsprechend ausdehnen kann.

Vorzugsweise wird zum Lösen des Verschlussmittels heißes Wasser eingesetzt, beispielsweise Wasser, das zwischen 70° und 100° heiß ist. Dieses heiße Wasser kann sowohl zum Lösen des Verschlussmittels als auch zum Entfalten des Stützkörpers eingesetzt werden, indem durch ein Aufsaugen von Wasser lokale Quellprozesse eingeleitet werden, was zu einem Entfalten führt. Für das Lösen des Verschlussmittels und Öffnen der Portionspackung wird eine erste Menge an Wasser eingesetzt, die beispielsweise 5 ml bis 100 ml, insbesondere 10 ml bis 50 ml, umfasst. Dieses Wasser kann insbesondere bei der Zubereitung von Kaffee zusätzlich zum Vorbefeuchten, Quellen und Entgasen verwendet werden. Dies wird auch als Vorbrühen bezeichnet. Nach dem Öffnen wird eine zweite Menge an Wasser, insbesondere heißes Wasser, für die Getränkezubereitung zugeführt. Die zweite Menge an Wasser kann dann beispielsweise 100 ml bis 500 ml, insbesondere 150 ml bis 250 ml, umfassen, je nachdem, welche Menge an Getränk zubereitet wird.

Beim Öffnen der Portionspackung werden vorzugsweise die Klappen des Stützkörpers an einer Oberseite des Behälters zwischen 90° und 180°, insbe-sondere zwischen 110° bis 150°, verschwenkt, so dass das Extraktionsmaterial von oben frei zugänglich ist und sich entsprechend auch nach oben ausdehnen kann. Das durch das Öffnen der Klappen zusätzlich entstehende Volumen ist mindestens genauso groß, typischerweise sogar mehr als doppelt so groß wie das ursprüngliche Volumen der geschlossenen Portionspackung. Das zusätzliche Volumen kann auch vom Lösungsmittel genutzt werden. Bei der Zubereitung von Kaffee entsteht beispielsweise eine Dispersion aus Kaffeemehl und Wasser.

Die Erfindung wird nachfolgend anhand mehrerer Ausführungsbeispiele mit Bezug auf die beigefügten Zeichnungen näher erläutert. Es zeigen:
- Figuren 1 bis 3: mehrere Ansichten einer Portionspackung in unterschiedlichen Positionen;
- Figur 4: eine schematische Ansicht einer Portionspackung in einer geschlossenen Ausgangsposition;
- Figur 5: eine schematische Ansicht der Portionspackung der Figur 4 beim Öffnungsprozess;
- Figur 6: eine schematische Ansicht der Portionspackung der Figur 4 bei der Getränkezubereitung;
- Figur 7: eine Ansicht eines Zuschnitts des Filtermaterials für eine Portionspackung;
- Figur 8: eine Ansicht eines Zuschnitts eines Stützkörpers für eine Portionspackung;
- Figur 9: Ansichten eines modifizierten Stützkörpers für eine Portionspackung mit integriertem Verschlusselement;
- Figur 10: eine perspektivische Ansicht einer Portionspackung in einer geöffneten Position gemäß einem weiteren Ausführungsbeispiel;
- Figur 11: eine perspektivische Ansicht einer Portionspackung in einer geschlossenen Position;
- Figuren 12 bis 16: mehrere Ansichten der Portionspackung der Figur 11 bei einem Öffnungsvorgang, und
- Figur 17: eine Ansicht des Zuschnittes des Stützkörpers für die Portionspackung der Figuren 11 bis 16.

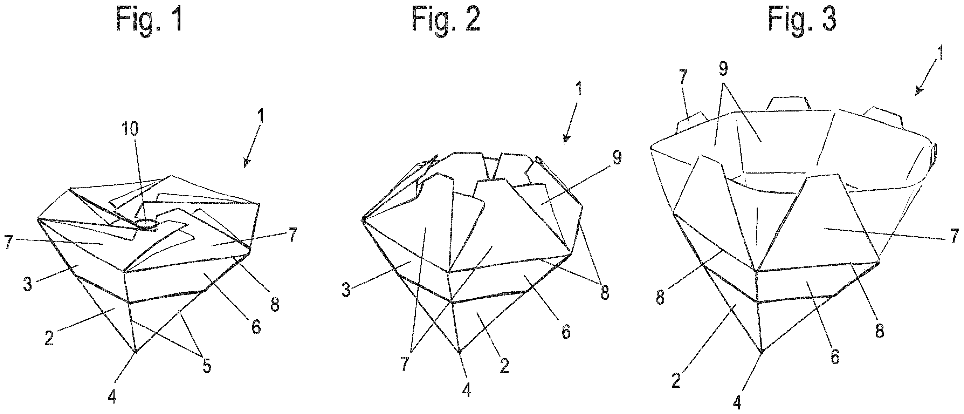

Eine Portionspackung 1 umfasst einen Behälter 2 aus Filtermaterial, der eine untere Spitze 4 aufweist, von der sich Seitenwände aufweitend nach oben erstrecken. In der in Figur 1 dargestellten geschlossenen Position befindet sich an einem oberen Rand des Behälters 2 ein Stützkörper 3, der diesen ringförmig umgibt. Der Stützkörper 3 ist dabei nur im Bereich eines oberen Randes der Portionspackung 1 vorgesehen, während die nach unten ragende Spitze nicht von dem Stützkörper 3 überdeckt ist.

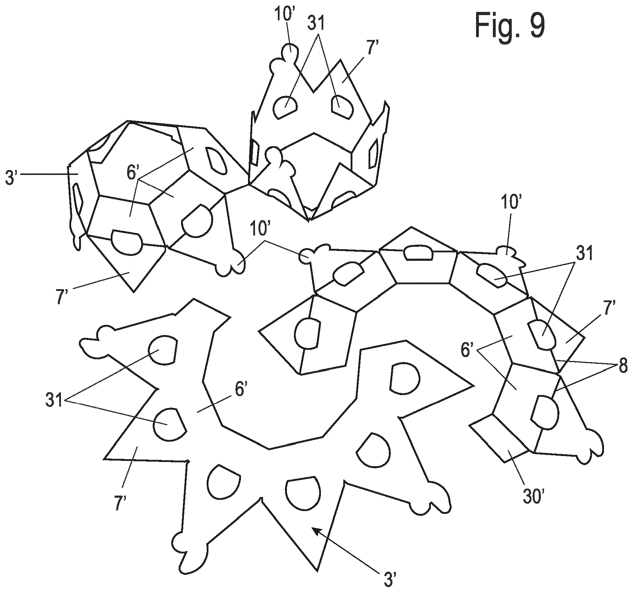

Der Behälter 2 ist pyramidenförmig ausgebildet und umfasst ausgehend von der Spitze 4 mehrere aufspreizende Seitenflächen, die über Seitenkanten 5 miteinander verbunden sind. Der Stützkörper 3 ist im Bereich dieser Seitenflächen ringförmig ausgebildet und umfasst Abschnitte 6, die die Seitenfläche zumindest in oberen Bereich überdecken, der vorzugsweise bezogen auf die Höhe der Portionspackung 1 kleiner als 50%, insbesondere 25-40% der gesamten Höhe der geschlossenen Portionspackung ausgebildet ist, wobei die Höhenrichtung in der Gebrauchsposition vorzugsweise vertikal ausgerichtet ist. Diese Abschnitte 6 sind über Faltkanten 8 mit Klappen 7 verbunden, die in der Ausgangsposition im Wesentlichen horizontal an einer Oberseite der Portionspackung 1 angeordnet sind, wobei die Klappen 7 optional auch geneigt zur Horizontalen ausgerichtet sein können. Zumindest ist die Portionspackung 1 in einer Ausgangsposition geschlossen, wobei hierfür ein Verschlussmittel 10 vorgesehen ist, das als Haltemittel ausgebildet ist und die Klappen 7 in einem mittleren Bereich zusammenhält. Hierfür kann das Verschlussmittel beispielsweise als Flächenelement ausgebildet sein, das mit den Spitzen der Klappen 7 verklebt ist, vorzugsweise mit einem für die Zubereitung von Lebensmitteln zugelassenen Klebemittel. In einer weiteren Ausführungsform kann das Verschlussmittel auch als mechanisches Rastmittel ausgebildet sein, das in die Geometrie des Stützkörpers integriert sein kann, wie in Figur 9 dargestellt und unten beschrieben ist.

In Figur 2 ist eine mittlere Öffnungsposition der Portionspackung 1 gezeigt. Durch Lösen des Verschlussmittels 10 können die Klappen 7 des Stützkörpers um die Faltkanten 8 verschwenkt werden, wobei an den Klappen 7 ein oberer Abschnitt des Filtermaterials des Behälters 2 festgelegt ist. Das Filtermaterial ist im oberen Bereich in der geschlossenen Position gefaltet ausgebildet und kann dann durch Verschwenken der Klappen 7 entfaltet werden.

In Figur 3 ist die Portionspackung 1 in einer geöffneten Position gezeigt, in der die Klappen 7 um etwa 130°, also zwischen 110° und 150°, verschwenkt wurden und dadurch ein oberer Abschnitt 9 des Filtermaterials, der zumindest bereichsweise an den Klappen 7 fixiert ist, ebenfalls verschwenkt wurde. In dieser Öffnungsposition ist das in der Positionspackung 1 angeordnete Extraktionsmaterial von oben zugänglich und kann beispielsweise mit heißem Wasser übergossen werden.

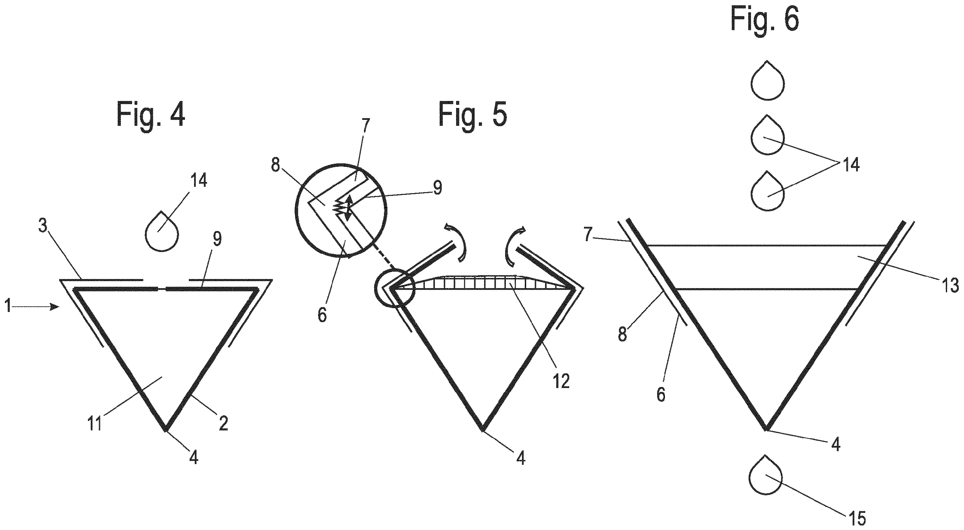

In Figur 4 ist die Portionspackung 1 schematisch dargestellt, um den Prozess der Getränkezubereitung darzustellen. In der Portionspackung 1 befindet sich ein Extraktionsmaterial 11, insbesondere Kaffeemehl. Der Behälter 2 aus Filtermaterial ist in einer Schnittansicht im Wesentlichen dreieckförmig ausgebildet und umfasst eine untere Spitze 4 und einen oberen Abschnitt 9, der im Wesentlichen horizontal ausgerichtet ist. Durch eine erste Menge an Wasser, insbesondere heißes Wasser, beispielsweise zwischen 10 ml und 50 ml, wie dies durch den Tropfen 14 schematisch dargestellt wird, kann ein an der Oberseite der Portionspackung 1 angeordnetes Verschlussmittel 10 gelöst werden. Durch die Befeuchtung mit Wasser kann das Klebemittel gelöst, das Material des Verschlussmittels bis zum Versagen geschwächt oder die Steifigkeit einer Steckverbindung herabgesetzt werden, so dass keine Haltekräfte mehr durch das Verschlussmittel erzeugt werden können.

Die erste Menge an Wasser ist vorzugsweise so groß, dass sich die Flüssigkeit an einer Oberseite der Portionspackung 1 verteilen kann, so dass auch der Stützkörper 3 zumindest teilweise mit Wasser vollsaugen kann. Der Stützkörper 3 besteht vorzugsweise aus Karton oder einem dicken Papier.

Wie in Figur 5 dargestellt ist, kann an einer oberen Faltkante 8 des Stützkörpers durch die Benetzung mit Wasser ein lokaler Quellprozess erzeugt werden, der dafür sorgt, dass eine Innenseite der Faltkante aufquillt, so dass eine Klappe 7 relativ zu dem Abschnitt 6 verschwenkt. Das Aufquellen wird dadurch erreicht, dass das Material des Stützkörpers 3 an der Innenseite der Faltkante komprimiert ist und durch das Aufnehmen von Wasser eine Volumenvergrößerung stattfindet.

Durch das Verschwenken der Klappen 7 wird die Portionspackung 1 nach oben hin geöffnet, und es kann nun heißes Wasser auf das Extraktionsmaterial 11, insbesondere zur Herstellung von Kaffee oder Tee, aufgebracht werden. Durch Aufquellen des Extraktionsmaterials vergrößert sich dessen Volumen, in der Zeichnung wird dies durch den oberen Bereich als Zusatzvolumen 12 dargestellt. Insbesondere bei der Zubereitung von hochwertigem Kaffee sind die Schritte Vorbefeuchten, Quellen und Entgasen wichtig.

In Figur 6 ist der Brühvorgang zur Getränkezubereitung schematisch dargestellt. Eine zweite Menge an Wasser gemäß der Tropfen 14 wird von oben auf die Portionspackung 1 aufgebracht, um das Extraktionsmaterial 11, insbesondere Kaffeemehl, aufzubrühen. Hierbei kann sich das Extraktionsmaterial nach oben hin vergrößern und zusätzlich in Dispersion mit dem Lösungsmittel gehen, wie dies insbesondere bei Kaffeemehl beim Brühvorgang auftritt. Dies wird in der Zeichnung als Zusatzvolumen 13 dargestellt, das über das Volumen des trockenen Kaffeemehls hinausgeht. An den Seitenwänden tritt das gefilterte Getränk 15 aus, sammelt sich unten, durch den Tropfen symbolisiert, und kann zum Beispiel in einer Tasse aufgefangen werden. Der Benutzer kann nach der Getränkezubereitung die Portionspackung an den Klappen 7 gut greifen und entsorgen.

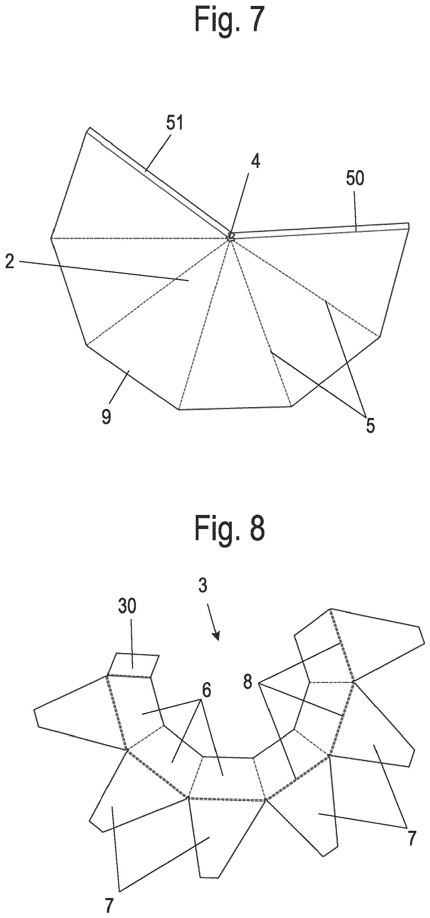

In Figur 7 ist ein Materialzuschnitt des Filtermaterials vor der Konfektionierung zu einem Behälter 2 gezeigt. Das Filtermaterial ist in einer flachen Position im Wesentlichen kreisausschnittsförmig ausgebildet, wobei am äußeren Umfang gerade Kanten statt eines gerundeten Umfangs vorgesehen sind, wobei alternativ statt der Kanten auch Bögen vorgesehen sein können. In jedem Fall weist der Zuschnitt aus Filtermaterial zwei Randstreifen 50 und 51 auf, die an einer Spitze 4 aufeinandertreffen und miteinander verbunden werden, beispielsweise durch Kleben oder Verprägen, um eine schalen-, kegel- oder pyramidenförmige Grundform zu erhalten. Das Filtermaterial besteht vorzugsweise aus Filterpapier.

In Figur 8 ist ein Zuschnitt des Stützkörpers 3 im flachen Zustand gezeigt. Der Stützkörper 3 umfasst einen offenen ringförmigen Abschnitt, an dem nach außen hervorstehende Klappen 7 vorgesehen sind. Die Klappen 7 sind V-förmig oder konusförmig ausgebildet und verjüngen sich nach außen hin. Die Klappen 7 sind über Faltkanten 8 mit zusammenhängenden Abschnitten 6 verbunden, wobei an einem endseitigen Abschnitt 6 ein Randabschnitt 30 angeformt ist, der mit einem Abschnitt 6 am gegenüberliegenden Ende verbunden wird, insbesondere durch Kleben, Siegeln oder Prägen, um einen ringförmigen Stützkörper 3 herzustellen. Die Klappen 7 können dann zumindest bereichsweise mit dem oberen Abschnitt 9 des Filtermaterials zur Herstellung einer Portionspackung 1 verbunden werden, wiederum vorzugsweise durch die Verbindungstechniken Kleben, Siegeln oder Prägen.

In Figur 9 ist ein modifizierter Materialzuschnitt eines Stützkörpers 3' gezeigt, der in unterschiedlichen Positionen und Montagezuständen dargestellt ist. Der Stützkörper 3' ist in einer Ausgangsposition flach ausgebildet und umfasst zusammenhängende Abschnitte 6 an einem inneren Umfang, die einen offenen Ring bilden. Von den Abschnitten 6 stehen nach außen Klappen 7 hervor, die V-förmig ausgebildet sind, wobei an jeder Klappe eine Aussparung 31 ausgebildet ist. Der flache Zuschnitt wird zur Herstellung eines Stützkörpers 3' zunächst mit Faltkanten 8 versehen, so dass die Klappen 7' verschwenkbar an den Abschnitten 6' gelagert sind. An einzelnen Klappen 7' sind Vorsprünge 10' als Verschlussmittel ausgebildet, die endseitig an den Klappen 7' hervorstehen. Wenn der Stützkörper 3' über einen Randabschnitt 30' zu einem Ring geformt ist, wird er an einem Behälter 2 aus Filtermaterial angeordnet, der mit einem Extraktionsmaterial, insbesondere Kaffeemehl, befüllt wird. Anschließend werden die Klappen 7', die zumindest teilweise mit dem Abschnitt 9 des Filtermaterials verbunden sein können, in eine geschlossene Position verschwenkt, wobei in diesem Fall die Verschlussmittel durch die Vorsprünge 10' gebildet sind, die für eine mechanische Verriegelung der Portionspackung sorgen. Dies kann ein zusätzliches Element und den Einsatz von Klebemittel erübrigen. Auch bei diesem Ausführungsbeispiel erfolgt das Öffnen der Portionspackung durch den Einsatz von heißem Wasser, das auf eine Oberseite der Portionspackung aufgebracht wird, so dass Quellprozesse an dem Stützkörper 3', insbesondere im Bereich der Faltkanten 8, teilweise in Kombination mit Vorspannungen im Stützkörper, dafür sorgen, dass die Klappen 7' die Haltekräfte durch die Vorsprünge 10' überwinden und dann verschwenken. Durch Modifikation der Aussparungen 31 kann Einfluss auf den Öffnungsprozess genommen werden.

Um die Öffnungsgeschwindigkeit zu optimieren, können an der umlaufenden Faltkante 8 zwischen 20% bis 50% ausgeschnitten sein. Wenn keine Aussparungen 18 an der Faltkante 8 vorgesehen sind, öffnen sich zwar die Klappen 7 und 7',mit langsamerer Geschwindigkeit als mit Aussparungen 18, dafür aber mit mehr Kraft. Optionale Aussparungen 19, die sich nicht an der Kante 8, sondern auf der Fläche der Klappen 7/7" befinden, haben ebenfalls einen Einfluss auf das Öffnungsverhalten, da die Biegesteifigkeit der Klappen 7/7" und damit die Funktion des Verschlussmittels 10/10" beeinflusst wird.

In dem dargestellten Ausführungsbeispiel sind die Portionspackungen zur Zubereitung von Kaffee vorgesehen. Es ist natürlich auch möglich, andere Getränke herzustellen, insbesondere Tee oder Kaffeemischgetränke, wobei durch das Öffnen der Portionspackung das eingesetzte Extraktionsmaterial expandieren und aufquellen kann, ohne dass dies zu Problemen bei der Getränkezubereitung führt. Des Weiteren kann auch vollständig lösliches Extraktionsmaterial verwendet werden, bei der Herstellung von zum Beispiel Kakaogetränken stellt das Filterelement sicher, dass keine ungelösten Klumpen im Getränk landen.

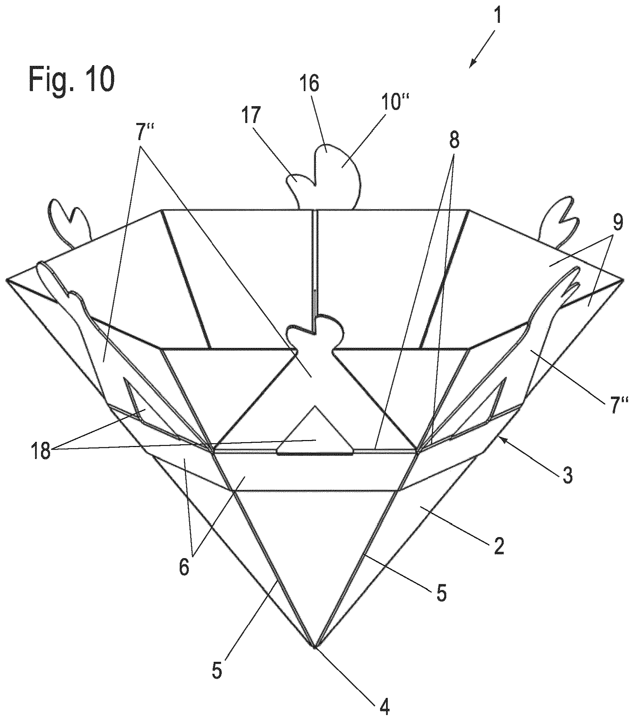

In Figur 10 ist eine Portionspackung in einer geöffneten Position gemäß einem weiteren Ausführungsbeispiel gezeigt. Die Portionspackung 1 umfasst wie bei den vorangegangenen Ausführungsbeispielen einen Behälter 2 aus einem flüssigkeitsdurchlässigem Filtermaterial, insbesondere Filterpapier, um den ein Stützkörper 3 ringförmig angeordnet ist. Der Behälter 2 ist im Wesentlichen pyramidenförmig ausgebildet mit einer in der Gebrauchsposition unten angeordneten Spitze 4, von der mehrere Seitenwände aus Filtermaterial nach oben aufspreizend angeordnet sind, die über Seitenkanten 5 miteinander verbunden sind.

Der Stützkörper 3 kann aus Kartonage oder einem dickeren Papier hergestellt sein und umfasst seitliche Abschnitte 6, die mit dem Filtermaterial des Behälters 2 an den Seitenrändern verbunden sein können, beispielsweise durch Verkleben. Die seitlichen Abschnitte sind dabei streifenförmig ausgebildet und nur in einem oberen Bereich der Seitenwände angeordnet, so dass benachbart zu der Spitze 4 das Filtermaterial nicht durch die Abschnitte 6 überdeckt ist. In einer weiteren Ausführung ist der Behälter 2 nur an den Klappen 7" mit dem Stützkörper verbunden.

Der Stützkörper 3 umfasst an den seitlichen Abschnitten 6 verschwenkbare Arme oder Klappen 7", die jeweils über eine Faltkante 8 mit einem seitlichen Abschnitt 6 verbunden sind. In dem dargestellten Ausführungsbeispiel sind sechs Klappen 7" vorgesehen, die im Wesentlichen dreieckförmig ausgebildet sind und einen Innenraum des Behälters 2 nach Art eines Sechsecks umgeben. An den Klappen 7" ist ein Abschnitt aus Filtermaterial fixiert, beispielsweise durch Verkleben, so dass bei einer Bewegung der Klappen 7" auch das Filtermaterial verschwenkt wird. An jeder Klappe 7" ist eine Aussparung 18 vorgesehen, um ein Öffnen zu erleichtern. Es ist auch möglich, auf eine Aussparung 18 im Bereich der Klappen 7" zu verzichten.

An jeder Klappe 7" ist endseitig ein Verschlussmittel 10" vorgesehen, das eine Führungskante 16 aufweist und einen Rastvorsprung 17. Die Verschlussmittel 10" von zwei, drei oder vier Klappen 7" können miteinander verriegelt werden, indem die Verschlussmittel 10" aufeinander gefaltet werden.

In dem Behälter 2 befindet sich ein Extraktionsmaterial, insbesondere Kaffeemehl oder Tee.

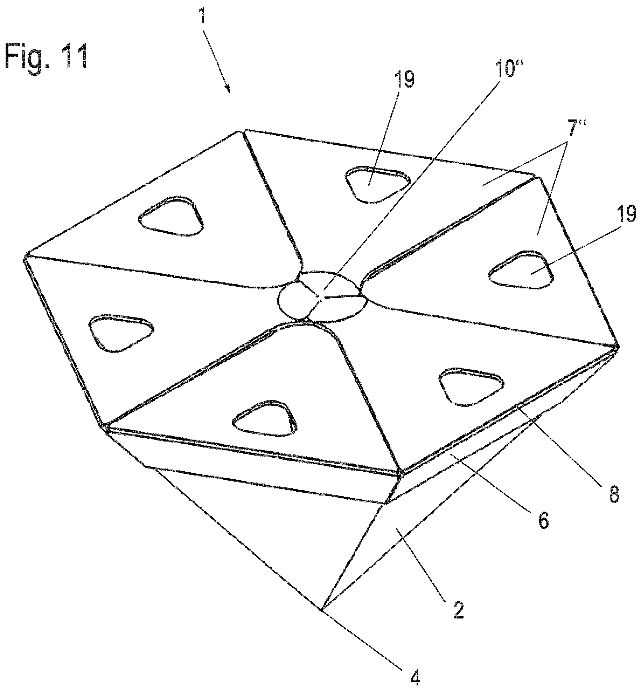

In Figur 11 ist die Portionspackung 1 in einer geschlossenen Position dargestellt, in der sie pyramidenförmig ausgebildet ist. Die Portionspackung 1 kann so in eine Maschine zur Zubereitung eines Brühgetränks eingesetzt werden. Verglichen mit Figur 1 erstrecken sich Aussparungen 19 nicht bis zu der Faltkante 8, sondern sind etwas kleiner ausgebildet, im Übrigen entspricht das Ausführungsbeispiel der Figur 10. Je nach gewünschter Funktionalität können die Aussparungen 19 unterschiedliche Geometrien haben, oder es kann auf sie verzichtet werden.

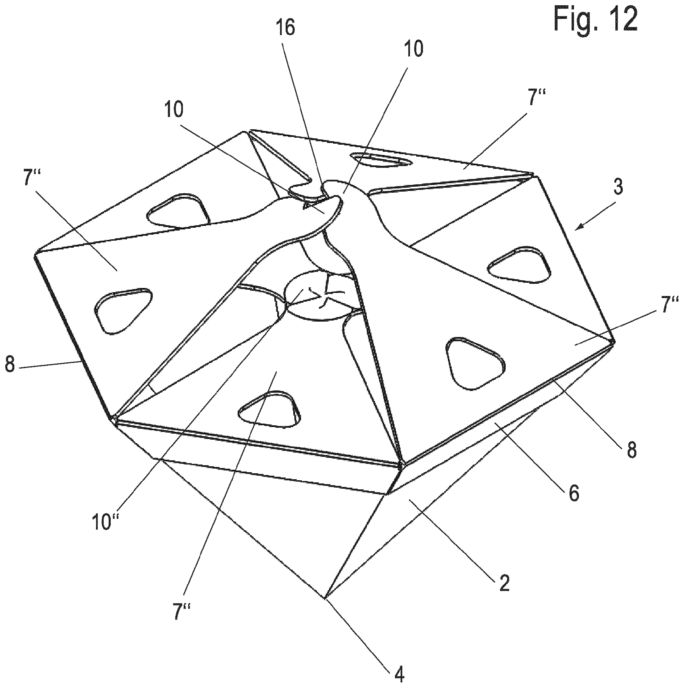

Der Öffnungsvorgang wird mit Bezug auf die Figuren 12 bis 16 näher erläutert.

Um die Portionspackung 1 zu öffnen, kann wahlweise manuell ein Öffnen der Klappe 7" erfolgen, oder - erfindungsgemässüber ein Aufbringen von Wasser, insbesondere heißem Wasser, was zu Quellprozessen an dem Stützkörper 3 im Bereich der Faltkanten 8 führt und ein automatisches Öffnen bewirkt.

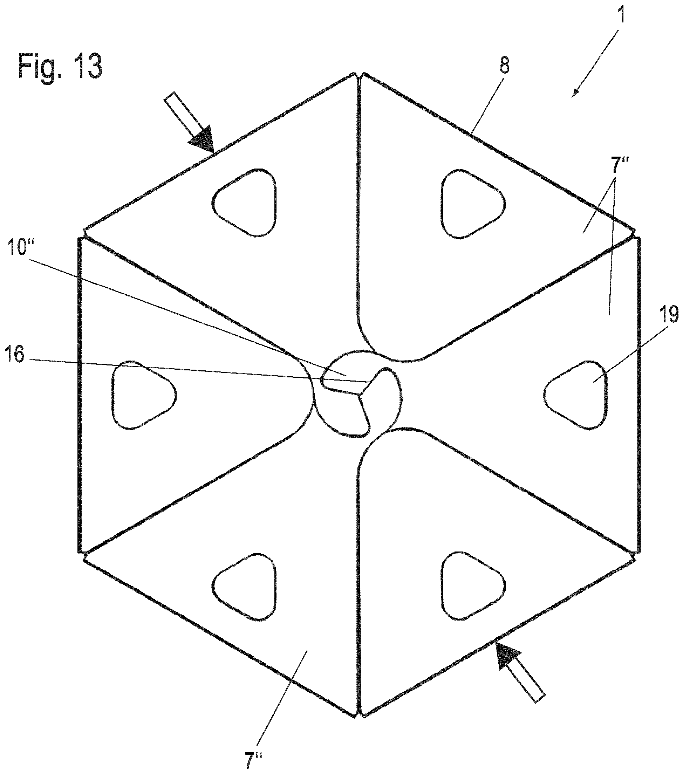

In Figur 12 wurden drei Klappen 7" leicht geöffnet, und es ist erkennbar, dass diese drei Klappen 7" im Bereich der Verschlussmittel 10" einander überlappen und gemeinsam um die jeweiligen Faltkanten 8 verschwenkt werden können. Dabei werden die Verschlussmittel 10" entriegelt und gleiten entlang der Führungskanten 16. Drei weitere Klappen 7" sind in Figur 12 noch in der geschlossenen verriegelten Position, so dass in dieser Position ein Austreten von Kaffeemehl durch die drei verschlossenen Klappen 7" verhindert wird. Um den Öffnungsvorgang zu erläutern, wurden die oberen Abschnitte 9 des Filtermaterials in den Figuren 12 bis 16 in dem Bereich der Klappen 7" weggelassen. In Figur 13 ist die Portionspackung 1 der Figur 12 in einer Draufsicht gezeigt.

Wird die Portionspackung 1 einer Stoß- oder Druckbelastung ausgesetzt, wie dies durch die Pfeile symbolisch dargestellt ist, kann gegebenenfalls ein Öffnen der drei oberen Klappen 7" bewirkt werden, deren Verschlussmittel 10" in der geschlossenen Position oberhalb der Verschlussmittel 10" der drei unteren Klappen 7" angeordnet sind. Die Portionspackung 1 bleibt dennoch geschlossen, da die Verschlussmittel 10" der drei unteren Klappen 7" verriegelt bleiben. Im Fall einer Torsion durch Schubbelastung stabilisiert je nach Richtung entweder das untere oder das obere aus den Klappen 7" gebildete Speichentripel den Verschluss, da die Führungskanten 16 und die Rastvorsprünge 17 jeweils abwechselnd in die eine beziehungsweise andere Richtung orientiert sind.

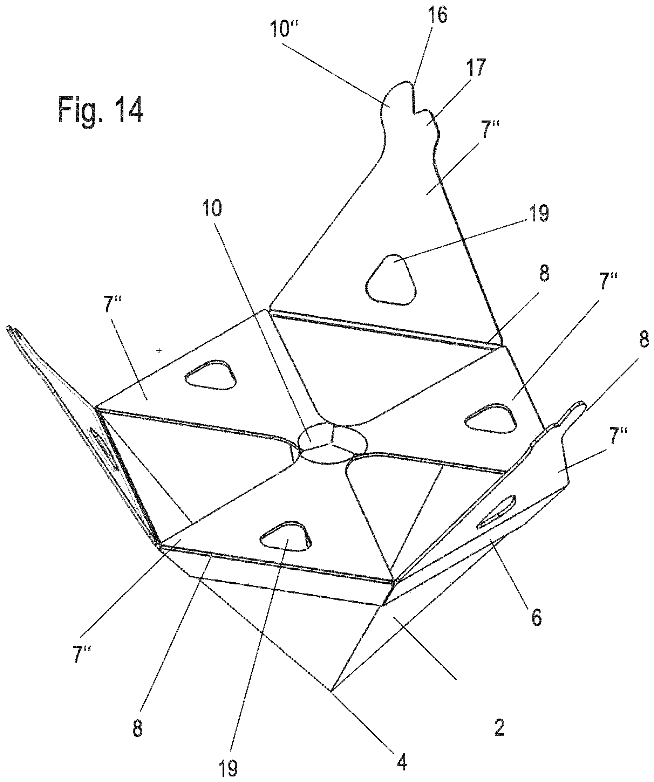

In Figur 14 sind die drei Klappen 7" um über 90° verschwenkt worden, während die drei unteren Klappen 7" über die Verschlussmittel 10" noch verriegelt sind. Es ist erkennbar, dass die drei unteren Klappen 7" den Behälter 2 noch im Wesentlichen verschließen, wobei das Filtermaterial im Bereich der unteren Klappen 7" zusätzlich die Öffnung an der Portionspackung 1 abdichtet.

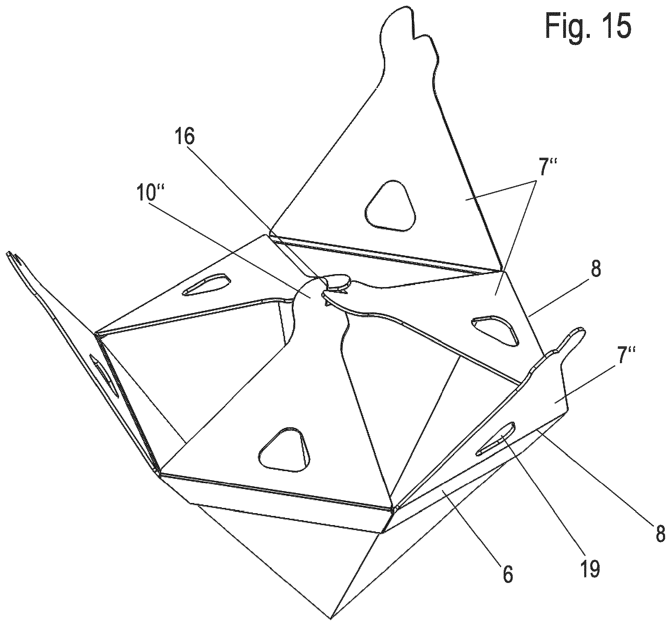

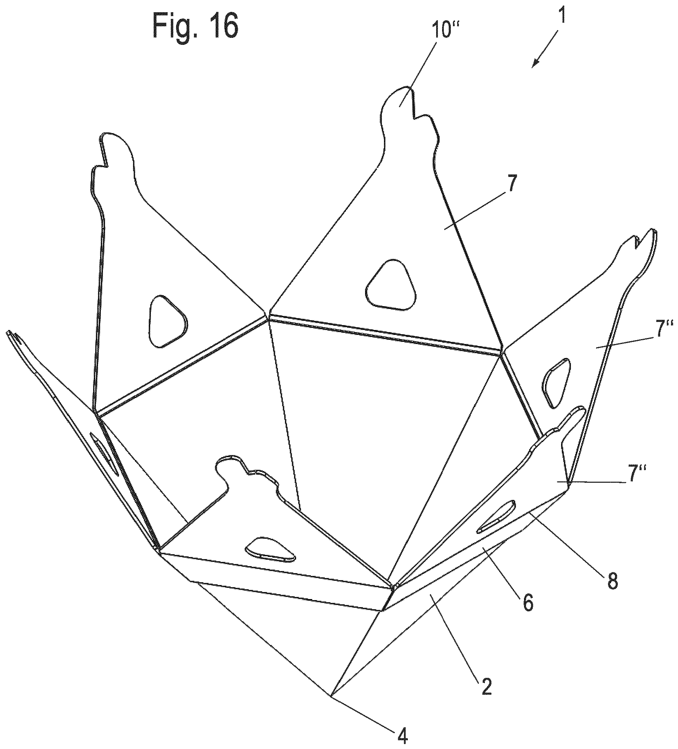

In Figur 15 sind die unteren Klappen 7" in einer leicht geöffneten Position gezeigt, in der die Verschlussmittel 10" entriegelt werden. In Figur 16 ist die Portionspackung 1 in einer vollständig geöffneten Position gezeigt, wobei im Bereich der Klappen 7" kein Filtermaterial dargestellt ist, um die Öffnungsmechanik besser sehen zu können. Zudem ist die Portionspackung 1 auch nicht mit Extraktionsmaterial gefüllt.

Wenn die Portionspackung 1 über Quellprozesse durch eine Flüssigkeit geöffnet wird, werden die sechs Klappen 7" im Wesentlichen gleichzeitig geöffnet, wobei die Klappen 7" mit den oberen Verschlussmitteln 10", die oberhalb der Verschlussmittel 10" der unteren Klappen 7" angeordnet sind, nur kurz nacheinander geöffnet werden. Durch die Quellprozesse werden die Klappen 7" im Wesentlichen gleichzeitig verschwenkt.

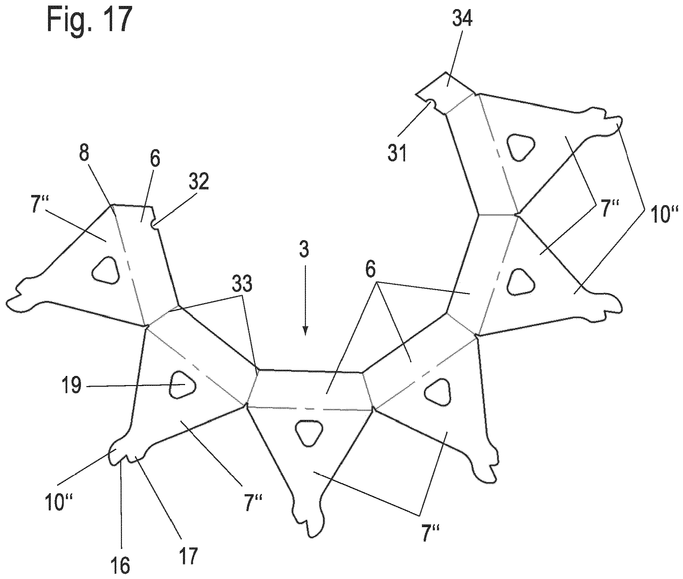

In Figur 17 ist der Stützkörper 3 in einem Zuschnitt gezeigt. Der Stützkörper 3 ist als einstückiges Bauteil aus Kartonage hergestellt und umfasst sechs Arme oder Klappen 7", die jeweils über Faltkanten 8 mit einem seitlichen Abschnitt 6 verbunden sind. Die seitlichen Abschnitte 6 können ringförmig entlang von Faltkanten 33 gefaltet werden, wobei an einem endseitigen Abschnitt 6 ein Verbindungssteg 34 angeformt ist, der mit einem gegenüberliegenden seitlichen Abschnitt 6 verbunden werden kann, beispielsweise durch Verkleben. An dem Verbindungssteg 34 ist eine Aussparung 31 vorgesehen, die zur Ausrichtung des Stützkörpers 3 beim Verkleben in Deckung mit einer Aussparung 32 an einem endseitigen seitlichen Abschnitt 6 gebracht werden kann. Der Zuschnitt aus Filtermaterial kann ebenfalls einstückig hergestellt sein und entlang eines Verbindungsabschnittes miteinander verklebt oder durch Prägen verbunden sein, um einen tütenförmigen Behälter 2 herzustellen. Der Stützkörper 3 wird vorzugsweise außen an dem Filtermaterial angebracht, optional kann er aber auch an einer Innenseite des Filtermaterials vorgesehen werden. Zudem kann die Anzahl der Klappen 7" auch variiert werden.

### Bezugszeichenliste

- 1: Portionspackung
- 2: Behälter
- 3, 3': Stützkörper
- 4: Spitze
- 5: Seitenkante
- 6, 6': Abschnitt
- 7, 7', 7": Klappe
- 8: Faltkante
- 9: Abschnitt
- 10, 10": Verschlussmittel
- 10': Vorsprung
- 11: Extraktionsmaterial
- 12: Zusatzvolumen
- 13: Zusatzvolumen
- 14: Tropfen
- 15: Getränk
- 16: Führungskante
- 17: Rastvorsprung
- 18: Aussparung
- 19: Aussparung
- 30, 30': Randabschnitt
- 31: Aussparung
- 32: Aussparung
- 33: Faltkante
- 34: Verbindungssteg
- 31: Aussparung
- 50: Randstreifen
- 51: Randstreifen

## Patentansprüche

1. Portionspackung (1) für die Herstellung eines Getränkes, insbesondere Kaffee, umfassend einen Behälter (2) aus Filtermaterial, in dem ein Extraktionsmaterial angeordnet ist, und einen Stützkörper (3), der den Behälter (2) zumindest bereichsweise umgibt, wobei der Behälter (2) in einer Ausgangsposition geschlossen ausgebildet ist und durch Verschwenken zumindest eines Teils eines Randes des Filtermaterials zu öffnen ist, wobei der Behälter (2) in der Ausgangsposition durch ein Verschlussmittel (10, 10") in der geschlossenen Position gehalten ist, **dadurch gekennzeichnet, dass** das Verschlussmittel (10, 10") für einen Zubereitungsvorgang durch Befeuchtung mit Wasser lösbar ist, um die Portionspackung (1) selbsttätig zu öffnen.

2. Portionspackung nach Anspruch 1, **dadurch gekennzeichnet, dass** der Stützkörper (3) aus einem durch Wasser aufquellbaren Material besteht.

3. Portionspackung nach Anspruch 1 oder 2, **dadurch gekennzeichnet, dass** der Stützkörper sich bei Befeuchtung mit Wasser an mindestens einer Faltkante (8) entfaltet.

4. Portionspackung nach einem der vorhergehenden Ansprüche, **dadurch gekennzeichnet, dass** der Stützkörper (3, 3') mehrere Klappen (7, 7', 7") an einer Oberseite des Behälters (2) aufweist, die über eine Faltkante (8) mit einem Abschnitt (6, 6') an einer Seitenwand des Behälters (2) verbunden sind.

5. Portionspackung nach einem der vorhergehenden Ansprüche, **dadurch gekennzeichnet, dass** der Stützkörper (3, 3') ringförmig an einem oberen Rand des Behälters (2) in einer geschlossenen Position vorgesehen ist.

6. Portionspackung nach einem der vorhergehenden Ansprüche, **dadurch gekennzeichnet, dass** der Stützkörper (3, 3') aus Karton hergestellt ist.

7. Portionspackung nach einem der vorhergehenden Ansprüche, **dadurch gekennzeichnet, dass** der Behälter (2) mit dem Stützkörper (3, 3') in der geschlossenen Position in Draufsicht fünf- bis achteckig ausgebildet ist, vorzugsweise sechseckig.

8. Portionspackung nach einem der vorhergehenden Ansprüche, **dadurch gekennzeichnet, dass** der Behälter (2) an einer Unterseite eine Spitze (4) aus Filtermaterial aufweist, die nicht von dem Stützkörper (3, 3') überdeckt ist.

9. Portionspackung nach einem der vorhergehenden Ansprüche, **dadurch gekennzeichnet, dass** der obere Bereich (9) des Filtermaterials zusammen mit dem Stützkörper (3) entfaltbar ist.

10. Portionspackung nach einem der vorhergehenden Ansprüche, **dadurch gekennzeichnet, dass** das Filtermaterial in der Ausgangsposition an der Oberseite des Behälters (2) gefaltet ist und über den Stützkörper (3, 3') und/oder die Verschlussmittel (10, 10') in der gefalteten Position gehalten ist.

11. Portionspackung nach einem der vorhergehenden Ansprüche, **dadurch gekennzeichnet, dass** das Volumen der Einzelportion während der Zubereitung über doppelt so groß, insbesondere über dreimal so groß, wie das Ausgangsvolumen vor der Zubereitung ist.

12. Portionspackung nach einem der vorhergehenden Ansprüche, **dadurch gekennzeichnet, dass** der Kontakt zwischen Behälter (2) und Stützkörper (3, 3') durch Sicken, Rippen oder Ausstanzungen minimiert ist.

13. Portionspackung nach einem der vorhergehenden Ansprüche, **dadurch gekennzeichnet, dass** an dem Stützkörper an einer umlaufenden Faltkante (8), an der Klappen (7, 7', 7") angelenkt sind, Aussparungen (18, 19) vorgesehen sind, die vorzugsweise zwischen 20% bis 50% der Länge der Faltkante (8) einnehmen.

14. Verfahren zur Herstellung eines Getränks mit einer Portionspackung (1) mit den folgenden Schritten:
- Einlegen einer geschlossenen Portionspackung (1) mit einem Behälter (2) aus Filtermaterial, in dem ein Extraktionsmaterial angeordnet ist, wobei ein Stützkörper (3, 3') den Behälter (2) umgibt, in eine Vorrichtung zur Getränkezubereitung;
- Aufbringen von Wasser auf die geschlossene Portionspackung (1) und Lösen eines an der Portionspackung (1) vorgesehenen Verschlussmittels (10, 10', 10") durch die Befeuchtung mit Wasser;
- Selbsttätiges Öffnen der Portionspackung (1) durch das Lösen des Verschlussmittels (10, 10', 10") und einem Entfalten des Stützkörpers (3, 3') an dem Behälter (2), und
- Aufbringen von Wasser auf das in dem Behälter (2) angeordnete Extraktionsmaterial zur Getränkezubereitung.

15. Verfahren nach Anspruch 14, **dadurch gekennzeichnet, dass** zum Lösen des Verschlussmittels (10, 10") heißes Wasser eingesetzt wird.

16. Verfahren nach Anspruch 15, **dadurch gekennzeichnet, dass** das Wasser mit einer Menge zwischen 5 ml bis 100 ml, insbesondere 10 ml bis 50 ml, zum Lösen des Verschlussmittels (10, 10', 10") aufgebracht wird.

17. Verfahren nach einem der Ansprüche 14 bis 16, **dadurch gekennzeichnet, dass** der Stützkörper (3, 3') Klappen (7, 7', 7") an einer Oberseite des Behälters (2) aufweist, die sich beim Öffnen zwischen 90° und 180°, insbesondere 110° bis 150°, verschwenken.

## Claims

1. Portion pack (1) for producing a beverage, in particular coffee, comprising a container (2) made of filter material in which an extraction material is arranged, and a supporting body (3) which surrounds the container (2) at least in some areas, wherein the container (2) is closed in a starting position and can be opened by pivoting at least one portion of an edge of the filter material, wherein the container (2) in the starting position is held in the closed position by a closure means (10, 10") **characterized in that** the closure means (10, 10") can be released for a preparation process by moistening with water to open the portion pack (1) automatically.

2. Portion pack according to claim 1, **characterized in that** the supporting body (3) consists of a material which is swellable by water.

3. Portion pack according to claim 1 or 2, **characterized in that** the supporting body unfolds on at least one folding edge (8) when moistened with water.

4. Portion pack according to one of the preceding claims, **characterized in that** the supporting body (3, 3') has a plurality of flaps (7, 7', 7") on an upper side of the container (2), which are connected via a folding edge (8) to a section (6, 6') on a side wall of the container (2).

5. Portion pack according to one of the preceding claims, **characterized in that** the supporting body (3, 3') is provided annularly on an upper edge of the container (2) in a closed position.

6. Portion pack according to one of the preceding claims, **characterized in that** the supporting body (3, 3') is made of cardboard.

7. Portion pack according to one of the preceding claims, **characterized in that** the container (2) with the supporting body (3, 3') in the closed position is designed in a pentagonal to octagonal manner in a top view, preferably hexagonal.

8. Portion pack according to one of the preceding claims, **characterized in that** the container (2) has a tip (4) of filter material on an underside which is not covered by the supporting body (3, 3').

9. Portion pack according to one of the preceding claims, **characterized in that** the upper section (9) of the filter material can be unfolded together with the supporting body (3).

10. Portion pack according to one of the preceding claims, **characterized in that** the filter material is folded at the upper side of the container (2) in the starting position and is held in the folded position by the supporting body (3, 3') and/or the closure means (10, 10').

11. Portion pack according to one of the preceding claims, **characterized in that** the volume of the individual portion during preparation is more than twice as large, in particular more than three times as large, as the initial volume before preparation.

12. Portion pack according to one of the preceding claims, **characterized in that** the contact between the container (2) and the supporting body (3, 3') is minimized by beads, ribs or punched portions.

13. Portion pack according to one of the preceding claims, **characterized in that** recesses (18, 19) are provided on the supporting body at a circumferential folding edge (8) to which flaps (7, 7', 7") are hinged, said recesses (18, 19) preferably occupying between 20% to 50% of the length of the folding edge (8).

14. Method for producing a beverage with a portion pack (1) comprising the following steps:
- inserting a closed portion pack (1) with a container (2) made of filter material, in which an extraction material is arranged, wherein a supporting body (3, 3') surrounds the container (2), into a device for preparing beverages;
- applying water to the closed portion pack (1) and releasing a closure means (10, 10', 10") provided on the portion pack (1) by moistening with water;
- automatically opening the portion pack (1) by releasing the closure means (10, 10', 10") and unfolding the supporting body (3, 3') on the container (2), and
- applying water to the extraction material arranged in the container (2) for beverage preparation.

15. Method according to claim 14, **characterized in that** hot water is used to release the closure means (10, 10").

16. Method according to claim 15, **characterized in that** the water is applied in an amount between 5 ml to 100 ml, in particular 10 ml to 50 ml, to release the closure means (10, 10', 10").

17. Method according to one of claims 14 to 16, **characterized in that** the supporting body (3, 3') has flaps (7, 7', 7") on an upper side of the container (2), which flaps (7, 7', 7") pivot between 90° and 180°, in particular 110° to 150°, during opening.

## Revendications

1. Emballage d'une portion (1) pour produire une boisson, notamment de café, comprenant un récipient (2) en matériau filtrant contenant de l'extrait et un organe d'appui (3) entourant au moins par zones, le récipient (2),
- le récipient (2) étant fermé à partir d'une position de départ et s'ouvrant par basculement d'au moins une partie du bord du matériau filtrant,
- le récipient (2) étant tenu en position finale par un moyen de fermeture (10, 10") en position fermée,
emballage **caractérisé en ce que**
le moyen de fermeture (10, 10") est soluble en l'humidifiant avec de l'eau pour faire une préparation pour que l'emballage d'une portion (1) s'ouvre automatiquement

2. Emballage d'une portion selon la revendication 1,
**caractérisé en ce que**
l'organe d'appui (3) est en un matériau qui gonfle avec de l'eau.

3. Emballage d'une portion selon la revendication 1 ou 2,
**caractérisé en ce que**
l'organe d'appui se déplie au niveau d'au moins une arête de pliage (8) lorsqu'il est mouillé avec de l'eau.

4. Emballage d'une portion selon l'une des revendications précédentes, **caractérisé en ce que**
l'organe d'appui (3, 3') comporte plusieurs volets (7, 7', 7") sur le côté supérieur du récipient (2) et qui sont reliés par une arête de pliage (8) avec un segment (6, 6') d'une paroi latérale du récipient (2).

5. Emballage d'une portion selon l'une des revendications précédentes, **caractérisé en ce que**
l'organe d'appui (3, 3') en position fermée entoure de manière annulaire le bord supérieur du récipient (2).

6. Emballage d'une portion selon l'une des revendications précédentes, **caractérisé en ce que**
l'organe d'appui (3, 3') est en carton.

7. Emballage d'une portion selon l'une des revendications précédentes, **caractérisé en ce que**
le récipient (2) avec l'organe d'appui (3, 3') en position fermée, est, en vue de dessus de forme pentagonale jusqu'à octogonale, et de préférence de forme hexagonale.

8. Emballage d'une portion selon l'une des revendications précédentes, **caractérisé en ce que**
sur son côté inférieur, le récipient (2) présente une pointe (4) en un matériau filtrant qui n'est pas couverte par l'organe d'appui (3, 3').

9. Emballage d'une portion selon l'une des revendications précédentes, **caractérisé en ce que**
la zone supérieure (9) du matériau filtrant se déplie avec l'organe d'appui (3).

10. Emballage d'une portion selon l'une quelconque des revendications précédentes,
**caractérisé en ce que**
en position de sortie le matériau filtrant est replié sur le côté supérieur du récipient (2) et il est tenu en position pliée par l'organe d'appui (3, 3') et/ou les moyens de fermeture (10, 10').

11. Emballage d'une portion selon l'une des revendications précédentes, **caractérisé en ce que**
le volume de la portion unique pendant la préparation est au moins double, notamment plus de trois fois aussi grand que le volume de départ avant la préparation.

12. Emballage d'une portion selon l'une des revendications précédentes, **caractérisé en ce que**
on réduit au minimum le contact entre le récipient (2) et l'organe d'appui (3, 3') par des nervures, des rainures ou des découpes.

13. Emballage d'une portion selon l'une des revendications précédentes, **caractérisé en ce que**
sur une arête de pliage (8) périphérique à laquelle sont articulés des volets (7, 7', 7"), l'organe d'appui a des évidements (18, 19) qui occupent, de préférence entre 20% jusqu'à 50% de la longueur de pliage (8).

14. Procédé de production d'une boisson avec un emballage pour une portion (1) comprenant les étapes suivantes consistant à :
- dans un dispositif pour la préparation de boisson, en prenant un récipient (2) en un matériau filtrant contenant un extrait,
l'organe d'appui (3, 3') entourant le récipient (2),
appliquer de l'eau sur l'emballage d'une portion (1), fermée, et libérer l'un des moyens de fermeture (10, 10', 10") prévus sur l'emballage pour une portion (1) en humidifiant avec de l'eau,
- laisser ouvrir automatiquement l'emballage d'une portion (1) par la libération du moyen de fermeture (10, 10', 10") et de dépliage de l'organe d'appui (3, 3') sur le récipient (2), et
- appliquer de l'eau sur l'extrait contenu dans le récipient (2) pour préparer la boisson.

15. Procédé selon la revendication 14,
**caractérisé en ce que**
on utilise de l'eau chaude pour libérer le moyen de fermeture (10, 10").

16. Procédé selon la revendication 15,
**caractérisé en ce que**
on applique une quantité comprise entre 5 ml jusqu'à 100 ml notamment 10 ml jusqu'à 50 ml d'eau, pour libérer le moyen de fermeture (10, 10', 10").

17. Procédé selon l'une des revendications 14 à 16,
**caractérisé en ce que**
l'organe d'appui (3, 3') comporte des volets (7, 7', 7") sur le côté supérieur du récipient (2) et qui bascule à l'ouverture entre 90° et 180°, notamment entre 110° et 150°.
